# EUROPEAN PATENT SPECIFICATION

(11) **EP 0 729 532 B1**
(45) Date of publication and mention of the grant of the patent: **22.03.2000**
(21) Application number: 95901844.1
(22) Date of filing: 09.11.1994
(51) Int. Cl.: E04B 1/86, G10K 11/16, B32B 3/26

(54) **ACOUSTIC INSULATING PANELS OR ELEMENTS**
SCHALLDÄMMENDE PANELE ODER ELEMENTE
PANNEAUX OU ELEMENTS D'ISOLATION ACOUSTIQUE

(30) Priority: 19.11.1993 GB 9323829
(43) Date of publication of application: 04.09.1996
(73) Proprietor: THE DOW CHEMICAL COMPANY, Midland, Michigan 48674 (US)
(72) Inventor: DEBLANDER, Jean-Philippe, Jacques, F-67450 Mundolsheim (FR)
(74) Representative: Raynor, John
(86) International application number: US9412964
(87) International publication number: WO9514136

(56) References cited:
- EP-A- 0 171 691
- DE-A- 2 231 387
- FR-A- 1 340 650
- FR-A- 1 603 661
- FR-A- 2 228 916
- GB-A- 2 027 255
- NL-A- 7 201 231
- US-A- 3 420 023
- US-A- 4 317 503

## Description

The present invention refers to acoustic insulating panels or elements, more particularly, to an acoustic insulating, multilayered panel or element having a soft core with hollow profiles.

In certain types of building construction, known as dry lining partition panels, it is customary to have a construction comprising two outer facing encompassing an air gap or cavity. Such a construction usually includes insulation boards or insulation materials applied between the facings in such a manner to provide thermal and/or acoustic insulation. Such panels are frequently used as partitions to divide the building area into separate areas, such as rooms and/or offices.

Dry lining partitions having two outer facings and a mineral fiber core are well-known in the industry and construction market as acoustic insulating partitions. However, a major disadvantage of such partitions having mineral fiber cores is the lack of mechanical strength of such fibers thereby requiring the outer facings to be fitted with screws and supported by metal or timber studs. This requires an extensive manufacturing process.

For example, U.S. Patent No. 4,317,503 describes a sound insulating building element or structural member including a plurality of parallel sheet elements of which a first inner, thick element has a plurality of internal cavities. The first inner, thick element is constituted by a layer of mineral fibers or stiff plastic foam. A second inner stiff element which is substantially pervious to air is connected to one main surface of the first, inner element and an outer, impervious element. The outer impervious element is arranged at a small distance from the second inner element in such a manner that substantially the entire outer element can oscillate freely in relation to the second inner element. A major disadvantage of this type of building elements is the complex and costly manufacturing process of such multilayered structure.

Another type of sound absorbing element is that known from EP-A-0 171 691 wherein a corrugated-like resilient core material provided with weights and sandwiched between two facings acts as a mass-spring-mass system to dampen sound energy.

Other known types of partitions are the multilayered structures including those having a foam or honeycomb core. The foam cores, however, although possessing suitable mechanical strength properties, possess very poor acoustic insulating properties. In order to increase the acoustic insulating properties of such partitions, the foam core would have to be of an unacceptable thickness and weight.

Partitions with outer facings and soft cores are also known as mass-spring-mass or mass-spring systems wherein the facings represent the mass and the soft core the spring. One difficulty encountered in the effort to improve acoustical properties in such systems is that while lowering the resonance frequency of a mass-spring-mass or mass-spring system, one also reduces the compressive strength thereof. As the core or spring becomes softer, the sandwich or laminate becomes very weak and difficult to use without reinforcement that, which in turn disturbs the acoustic behavior.

In view of the aforementioned deficiencies, it is highly desirable to provide thin panels having acoustic insulating properties and mechanical strength. It would also be desirable to provide lighter and cheaper panels without sacrificing the acoustic insulating properties and/or the mechanical strength thereof.

According to the invention, there is provided a multi-layered insulating panel or element having
(a) two outer facings, and
(b) a soft synthetic core material wherein the soft synthetic core material is a single, continuous soft synthetic foam core material having cavities, characterised in that the core material has intimate contact with both outer facings in alternate patterns, thereby providing gaps between the core material and the opposing outer facing and wherein the panel or element possesses both acoustic insulating properties and mechanical strength.

It has been found that the use of foams with hollow profiles as core materials in insulating panels or elements improves significantly its acoustic insulating properties. More particularly, it has been found that the preferred geometrical arrangement of the hollow profiles according to the present invention provides significantly improved acoustic insulating properties to panels or elements without sacrificing the mechanical strength thereof.
Figure 1 is a cross-sectional view of an insulating panel or element having two outer facings (1) enclosing a synthetic foam core material (2) having hollow profiles (3) of the present invention.
Figure 2 is a cross-sectional view of an insulating panel or element of the present invention having two outer facings (1) enclosing a synthetic foam core material (2) having hollow profiles (3) with necks (5), wherein the core material (2) also has channels (6).

The term "hollow" as used herein is meant to define any internal cavity of any size and shape.

The synthetic foam core material (2) of the insulating panels or elements of the present invention can be made from any synthetic, compressible foam, such as, for example, polyolefin foams. Preferably, the foam core material of the present invention is prepared from a thermoplastic resin comprising, in polymerized form, a non-aromatic olefin, such as ethylene or propylene. Copolymers of ethylene and a copolymerizable polar monomer, especially a carboxyl-containing comonomer may also be employed.

Exemplary copolymers include copolymers of ethylene and acrylic acid (EAA) or methacrylic acid and C₁-C₄ alkyl esters or ionomeric derivatives thereof; ethylene-vinyl acetate copolymers; ethylene-carbon monoxide copolymers; anhydride containing olefin copolymers of diene and a polymerizable monomer; copolymers of ethylene and an α-olefin having ultra low molecular weight (that is, less than 0.92 kg/m³); blends of all the foregoing resins; blends thereof with high, intermediate, or low density polyethylene. Particularly preferred thermoplastic resins are polyethylene, polypropylene, EAA copolymers having up to 30 percent by weight of copolymerized acrylic acid; ionomeric derivatives of the foregoing; ethylene-vinyl acetate copolymers; ultra low molecular weight polyethylene; and blends thereof with low density polyethylene.

Additional components, such as crosslinking agents designed either to provide latent crosslinking of the ethylenic polymer, such as silane-functional crosslinking agents or covalent or ionic crosslinking agents, may be included if desired.

In one embodiment of the present invention, elastic, closed-cell, crosslinked and non-crosslinked polyethylene-based foam is employed as the core material for use in the multilayered insulating panels or elements. Elastic, closed-cell, crosslinked and non-crosslinked polyethylene-based loam having a plurality of coalesced distinguishable expanded strands of foamed polyethylene polymer is especially preferred as the core material for use in the multilayered insulating panels or elements of the present invention. The polyethylene-based foam having a plurality of coalesced distinguishable expanded strands of foamed polymer is commercially available under the designation Strandfoam® (trademark of The Dow Chemical Company).

Other materials useful to prepare foams for use as the core material in the present invention include, for example, those prepared from rigid polyurethane, polyvinyl chloride, polystyrene, both extruded and expanded.

When Strandfoam® polymer foam is chosen as the core material for use in the present invention, it is preferably prepared by the extrusion foaming of a molten thermoplastic composition utilizing a die containing a multiplicity of orifices. The orifices are so arranged such that the contact between adjacent streams of the molten extrudate occurs during the foaming process and the contacting surfaces adhere to one another with sufficient adhesion to result in an unitary structure. The Strandfoam® polymer foam is compounded and extruded according to the teaching of U.S. Patent 4,824,720.

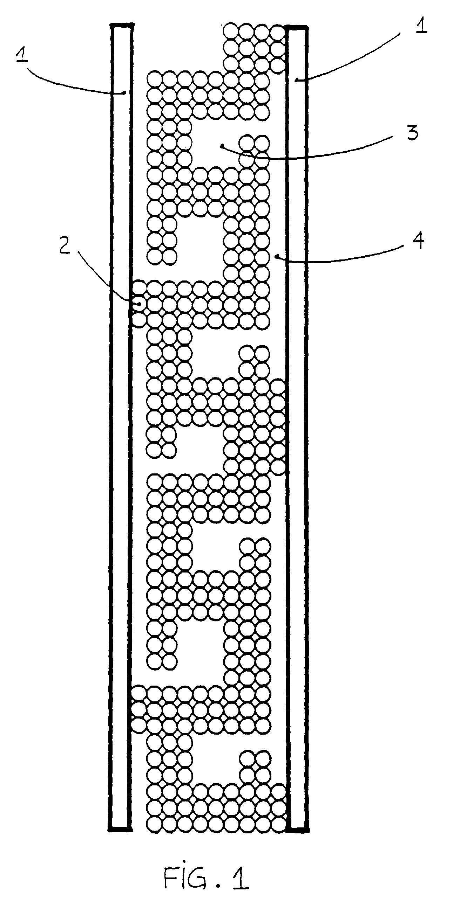

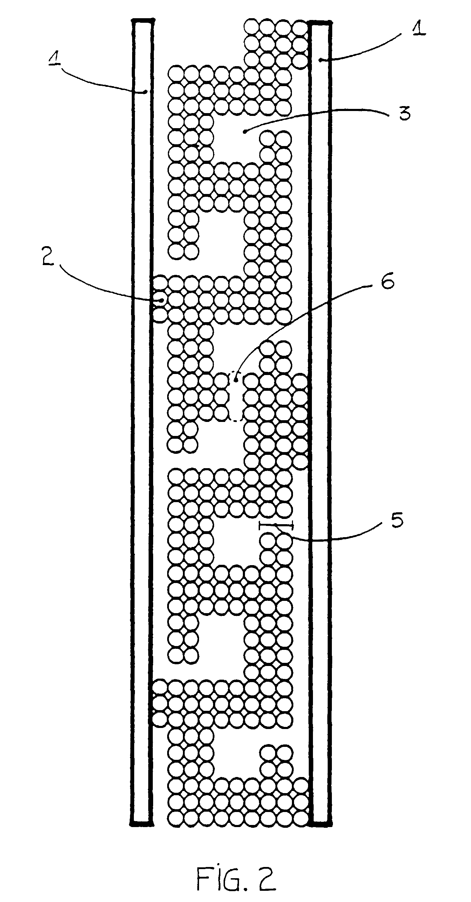

The insulating panel or element is further illustrated in Figures 1 and 2. The outer facings (1) encompass the foam core material (2) having hollow profiles (3). The foam core material (2) having hollow profiles (3) extends substantially parallel to the outer facings (1). Typically the thickness of the core material layer is 30 to 100 millimeters (mm), preferably of about 50 mm.

Optionally, one of the two outer facings (1) is coupled with spacing devices (not shown). When employed, these spacing devices attached to one outer facing (1) should not contact the opposing outer facing (1). The distance between spacing devices and the facings (1) should be of at least 1 to 5 mm. The distance between the spacing devices depends on the thickness of the outer facings (1) and is typically between 400 and 600 mm. The hollow profiles (3) of the foam core material (2) can be provided either by in situ extrusion or by manual or mechanical cutting techniques. For economical reason, the in situ extrusion of the hollow profiles is preferred in the present invention.

The geometrical arrangement of the hollow profiles (3) of the core material (2) according to the present invention shown in Figure 1 represents a preferred embodiment of the present invention. However, it should be understood that different geometrical arrangements could be provided as long as the arrangement does not affect the acoustic insulating properties obtained in the present invention.

One preferred embodiment and aspect of the present invention is that the spacing devices, when employed, only have intimate contact with one side of one of the two outer facings (1) thereby providing a gap (4) between the core material (2) and the opposing outer facing (1).

An important aspect of the present invention is that the core material (2) contacts both outer facings, however in an alternate pattern. A preferred aspect of the present invention is to provide a mass-spring-mass system with at least two springs in parallel but working in sequence, wherein the springs are provided by a single, continuous core material (2). That is, the gaps (4) represent a first spring working by bending and shear deformation and which is very soft and independent from the second spring represented by the core material (2) having hollow profiles (3). The second spring works by compression and is 5 times to 100 times stiffer than the first one.

It is important that the stiffness ratio of the two springs of the core material (2) be sufficiently high to achieve the combination of acoustic and mechanical properties. The higher the stiffness ratio, the better the resulting acoustic and mechanical properties.

Although this invention is particularly described with respect to the preferred embodiment of a single, continuous core material providing two springs in parallel but working in sequence, it should be understood that the same effect, that is two springs in parallel but working in sequence, can be achieved by providing soft core material phases in a spaced relationship between the two outer facings in such a manner that both extremities of the soft core material are contacting the outer facings. In between such soft core material phases, a second core material having a higher density than the soft core material is provided in such a manner that only one extremity of each second core material phase contacts only one and the same outer facing. The second core material can be the same or different material as the soft core material as long as the density of the second material is higher than the density of the soft core material and provides the two springs described hereinbefore.

It has been found that regardless of the type of core material employed, that is, single, continuous core material or combination of soft core material and second core material, it is not critical that the core material occupies the entire volume between the two outer facings. Thus, it is another embodiment of the present invention to provide a multilayered insulating panel or element having two outer facings (1) and discontinuous core material phases. The core material phases in this particular embodiment could be in format of patches or stripes.

The hollow profiles (3) within the core material (2) as well as the gaps (4) between the core material (2) and the outer facings (1), are preferably filled with air.

Depending on the geometrical arrangement of the hollow profiles (3) of the core material (2), various physical phenomena can be observed. For example, the arrangement of hollow profiles (3) of the core material (2) shown in Figure 1 could function as Helmholtz resonators. Helmholtz resonators are well-known in the art and can be tuned to reduce the transmission of sound at certain frequencies. This can be achieved by giving suitable dimensions to the neck (5) of the resonator in relation to the volume of the hollow profile (3).

Another phenomenon can be described as air chambers within the mass-spring-mass system built around a hollow profile core material (2) and the two outer facings (1). The air volumes on each side of the core material (2), between said core material (2) and the outer facings (1) are separated by the air-tight core material. Particularly, by drilling channels (6) of suitable diameters into the separating core material layers, these air chambers will communicate and the phases of vibrations within can be controlled to reduce sound transmission.

Another aspect of the invention is that it is possible to use the core material (2) of the mass-spring-mass system as a damper. In a damper, the oscillating movement of a mass is dampened by the opposing movement of another mass, usually smaller, whose displacement, controlled by a suitable spring will reduce the oscillation of the first mass. The sound pressure variations will create oscillations on the outer facings of the panel which will transmit the vibrations to the other facing through the core material. Part of the core material, designed as deadweight attached to the spring system will be dimensioned so that its mass and cinetic energy resulting of the vibrations tends to work in phase opposition to the outer facing movement, therefore dampening its oscillation, source of noise transmission. Such deadweight as described is located between the contact points that link the outer facings. A controlled extrusion process of the core material allows to delete or add rods, therefore allows to get the desired effect.

The outer facings (1) can be made of any material typically employed to produce insulating panels or elements. Exemplary materials useful as outer facings include, for example, plastic or particle boards, thick paper or cardboards, fiber boards, gypsum plaster boards, a flexible plastic film or foil. Other materials useful as outer facings include, for example, metal sheets, such as steel, lead, or aluminum sheets, plywood, timber boards, chipboards, gypsum blocks, and bricks. The preferred material for use as the outer facings (1) in the present invention is gypsum board in the building applications and metal sheet in the industrial applications. Typically, the outer facings (1) are of a thickness of 0.5 mm to 150 mm, preferably 1 mm to 70 mm.

The insulating panels or elements of the present invention are prefabricated thereby avoiding the assembly thereof on the building site. The insulating panel or element of the present invention is useful in applications such as, for example, wall structures in buildings, vehicles, ships, apparatuses and machine installations.

In a preferred embodiment of the present invention, the insulating panel or element is employed as wall structures in buildings and acoustic insulation of machines.

The following examples are given to illustrate the invention and should not be interpreted as limiting it in any way. Unless stated otherwise, all parts and percentages are given by weight.

### Example 1

An insulating panel or element according to the present invention was built by assembling two gypsum board outer facings (one 13.0 mm thick and the other one 18 mm thick) containing a 55.0 mm thick strand foam core material. The panel was tested for acoustic insulating properties according to the standard test method ISO 717 - 1982. The results are shown in Table I.

### Comparative Examples A-F

Various insulating panels using prior art core materials were tested for acoustic insulating properties using the same test methods and procedures as Example 1. The results are shown in Table I.

**TABLE 1**

| Example/Comp Example | Core Material | Thickness1 mm | Weight2, kg/m2 | Sound Reduction Index, dB |
|---|---|---|---|---|
| Ex. 1 | Strandfoam® polymer foam | 84 | 24 | 43 |
| Comp. Ex. A* | Honeycomb | 50 | 21 | 28 |
| Comp. Ex. B* | Air/Timber | 101 | 22 | 35 |
| Comp. Ex. C* | Woodwool | 76 | 70 | 35 |
| Comp. Ex. D* | Mineral Wool/Timber | 125 | 42 | 40 |
| Comp. Ex. E* | Mineral Wool/Metal Stud | 74 | 21 | 41 |
| Comp. Ex. F* | Mineral Wool/Special Stud | 101 | 33 | 44 |

| | | | | |
|---|---|---|---|---|
| * Not an example of the present invention. | | | | |
| 1 Total thickness of the panel. | | | | |
| 2 Weight of the entire insulating panel or element. | | | | |
| 3 measured according to the test method ISO 717. | | | | |

As readily apparent from the data shown in Table 1, the insulating panel or element of the present invention possesses comparable or even improved acoustic properties compared to comparative panels F and D although having a total thickness of 20 to 49 percent thinner, respectively, than these prior art panels.

## Claims

1. A multi-layered insulating panel or element having
(a) two outer facings(1), and
(b) a soft synthetic core material(2) wherein the soft synthetic core material(2) is a single, continuous soft synthetic foam core material(2) having cavities(3), characterized in that the core material(2) has intimate contact with both outer facings(1) in alternate patterns, thereby providing gaps(4) between the core material(2) and the opposing outer facing(1) and wherein the panel or element possesses both acoustic insulating properties and mechanical strength.

2. An insulating panel or element according to Claim 1 characterized in that it further comprises spacing devices.

3. An insulating panel or element according to Claim 2 characterized in that the spacing devices only have intimate contact with one outer facing(1) thereby providing gaps(4) between the spacing devices and the opposing outer facing(1).

4. An insulating panel or element according to any one of the preceding claims characterized in that core material (2) functions as springs of different stiffness mounted in parallel but working in sequence.

5. An insulating panel or element according to any one of the preceding claims characterized in that core material(2) is designed to function as a Helmholtz-type resonator.

6. An insulating panel or element according to any one of the preceding claims characterized in that core material(2) determines independent air chambers connected by drilling the core material.

7. An insulating panel or element according to any one of the preceding claims characterized in that core material(2) functions as a damper using the kinetic energy of the hollow profiles(3).

8. An insulating panel or element according to any one of the preceding claims characterized in that core material(2) is an elastic, closed-cell, crosslinked and non-crosslinked polyethylene-based foam having a plurality of coalesced distinguishable expanded strands of foamed polyethylene polymer.

## Patentansprüche

1. Mehrschichtiges isolierendes Panel oder Element mit
(a) zwei äußeren Verkleidungen (1) und
(b) einem weichen synthetischen Kernmaterial (2), wobei das weiche synthetische Kernmaterial (2) ein einziges kontinuierliches weiches synthetisches Schaumkernmaterial (2) mit Hohlräumen (3) ist, dadurch gekennzeichnet, daß das Kernmaterial (2) in innigem Kontakt mit beiden äußeren Verkleidungen (1) in alternierenden Mustern steht, wodurch Lücken (4) zwischen dem Kernmaterial (2) und der gegenüberliegenden äußeren Verkleidung (1) entstehen und wobei das Panel oder Element sowohl akustisch isolierende Eigenschaften als auch mechanische Festigkeit besitzt.

2. Isolierendes Panel oder Element nach Anspruch 1, dadurch gekennzeichnet, daß es außerdem Abstandhalter aufweist.

3. Isolierendes Panel oder Element nach Anspruch 2, dadurch gekennzeichnet, daß die Abstandhalter nur in innigem Kontakt mit einer äußeren Verkleidung (1) stehen und dadurch Lücken (4) zwischen den Abstandhaltern und der gegenüberliegenden äußeren Verkleidung (1) entstehen.

4. Isolierendes Panel oder Element nach einem der vorstehenden Ansprüche, dadurch gekennzeichnet, daß das Kernmaterial (2) als Federn unterschiedlicher Steifheit wirkt, die parallel montiert sind, aber in Reihe arbeiten.

5. Isolierendes Panel oder Element nach einem der vorstehenden Ansprüche, dadurch gekennzeichnet, daß das Kernmaterial (2) ausgestaltet ist, um als ein Resonator des Helmholtz-Typs zu wirken.

6. Isolierendes Panel oder Element nach einem der vorstehenden Ansprüche, dadurch gekennzeichnet, daß das Kernmaterial (2) unabhängige Luftkammern bestimmt, die durch Bohrungen durch das Kernmaterial miteinander verbunden sind.

7. Isolierendes Panel oder Element nach einem der vorstehenden Ansprüche, dadurch gekennzeichnet, daß das Kernmaterial (2) als ein Dämpfer wirkt, indem die kinetische Energie der hohlen Profile (3) verwendet wird.

8. Isolierendes Panel oder Element nach einem der vorstehenden Ansprüche, dadurch gekennzeichnet, daß das Kernmaterial (2) ein elastischer geschlossenzelliger vernetzter und nichtvernetzter Schaum auf Polyethylenbasis mit einer Vielzahl von koaleszierten unterscheidbaren expandierten Strängen aus geschäumtem Polyethylenpolymer ist.

## Revendications

1. Elément ou panneau d'isolation multicouche présentant :
(a) deux couches extérieures, et
(b) un matériau de coeur synthétique souple (2), le matériau de coeur synthétique souple (2) étant un seul matériau de coeur synthétique souple (2) continu présentant des cavités (3), caractérisé en ce que le matériau de coeur (2) est en contact intime avec les deux couches extérieures (1) en alternance, ce qui fournit des interstices (4) entre le matériau de coeur (2) et la couche extérieure (1) opposée, le panneau ou l'élément possédant à la fois des propriétés d'isolation acoustique et une résistance mécanique.

2. Elément ou panneau d'isolation selon la revendication 1, caractérisé en ce qu'il comprend en outre des dispositifs d'espacement.

3. Elément ou panneau d'isolation selon la revendication 2, caractérisé en ce que les dispositifs d'espacement sont seulement en contact intime avec une couche extérieure (1), ce qui fournit des interstices (4) entre les dispositifs d'espacement et la couche extérieure (1) opposée.

4. Elément ou panneau d'isolation selon l'une quelconque des précédentes revendications, caractérisé en ce que le matériau de coeur (2) fonctionne comme des ressorts de différentes raideurs montés en parallèle mais travaillant en série.

5. Elément ou panneau d'isolation selon l'une quelconque des précédentes revendications, caractérisé en ce que le matériau de coeur (2) est destiné à fonctionner comme un résonateur de type Helmholtz.

6. Elément ou panneau d'isolation selon l'une quelconque des précédentes revendications, caractérisé en ce que le matériau de coeur (2) délimite des chambres d'air indépendantes reliées par perçage du matériau de coeur.

7. Elément ou panneau d'isolation selon l'une quelconque des précédentes revendications, caractérisé en ce que le matériau de coeur (2) fonctionne comme un amortisseur utilisant l'énergie cinétique des profilés creux (3).

8. Elément ou panneau d'isolation selon l'une quelconque des précédentes revendications, caractérisé en ce que le matériau de coeur (2) est une mousse élastique à alvéoles fermées, à base de polyéthylène réticulé et non réticulé, qui présente plusieurs brins expansés discernables réunis par coalescence, de mousse de polyéthylène.
